# EUROPÄISCHE PATENTSCHRIFT

(11) **EP 3 642 502 B1**
(45) Veröffentlichungstag und Bekanntmachung des Hinweises auf die Patenterteilung: **15.09.2021**
(21) Anmeldenummer: 18734076.5
(22) Anmeldetag: 11.06.2018
(51) Int. Cl.: F16D 1/08

(54) **VERBINDUNG, AUFWEISEND EINE IN EINE HOHLWELLE ZUMINDEST TEILWEISE EINGESTECKTE WELLE UND EIN AUF DIE HOHLWELLE AUFGESTECKTES RINGTEIL UND PLANETENGETRIEBE**
COUPLING COMPRISING A SHAFT AT LEAST PARTIALLY INSERTED IN A HOLLOW SHAFT AND A HUB PLACED ON THE HOLLOW SHAFT AND A PLANETARY GEAR
COUPLAGE COMPRENANT UN ARBRE AU MOINS PARTIELLEMENT INSERE DANS UN ARBRE CREUX ET UN MOYEU PLACÉ SUR L'ARBRE CREUX ET UN ENGRENAGE PLANÉTAIRE

(30) Priorität: 22.06.2017 DE 102017005891
(43) Veröffentlichungstag der Anmeldung: 29.04.2020
(73) Patentinhaber: SEW-EURODRIVE GmbH & Co. KG, 76646 Bruchsal (DE)
(72) Erfinder: HALLER, Sascha, 76135 Karlsruhe (DE); SCHILLINGER, Jens, 76437 Rastatt (DE); DENKHAUS, Max, 76698 Ubstadt-Weiher (DE)
(86) Internationale Anmeldenummer: PCT/EP2018/025153
(87) Internationale Veröffentlichungsnummer: WO 2018/233875

(56) Entgegenhaltungen:
- EP-A1- 3 006 741
- CN-U- 204 921 723
- DE-A1-102013 100 129
- DE-B3-102004 011 361
- DE-U1-202013 105 568

## Beschreibung

Die Erfindung betrifft eine Verbindung, aufweisend eine in eine Hohlwelle zumindest teilweise eingesteckte Welle und ein auf die Hohlwelle aufgestecktes Ringteil und ein Planetengetriebe.

Es ist allgemein bekannt, dass bei einem Spannring, eine kraftschlüssige Verbindung mittels eines Ringteils herstellbar ist.

**Aus der** DE 20 2013 105568 U1 **ist als nächstliegender Stand der Technik eine Befestigungsvorrichtung zum konzentrischen Befestigen einer Welle an eine Drehgeberwelle und Motorfeedback-System mit dieser Befestigung.**

**Aus der** EP 3 006 741 A1 **ist eine Turbopumpe mit Wellenkupplung bekannt.**

**Aus der** DE 10 2013 100129 A1 **ist eine Vorrichtung zur Klemmung einer Nabe auf einer Welle bekannt.**

**Aus der** DE 10 2004 011361 B3 **ist eine Verbindung einer geschlitzten Hohlwelle oder dergleichen mit einer Welle oder einem Gegenstück bekannt.**

**Aus der** CN 204 921 723 U **ist eine Klemmverbindung für Wellen bekannt.**

Der Erfindung liegt daher die Aufgabe zugrunde, eine Verbindung weiterzubilden, wobei die Verbindung auf der schnell drehenden, also eintreibenden, Seite eines Planetengetriebes verwendbar ist.

Erfindungsgemäß wird die Aufgabe bei der Verbindung nach den in Anspruch 1 und bei dem Planetengetriebe nach den in Anspruch 14 angegebenen Merkmalen gelöst.

Von Vorteil ist dabei, dass die Verbindung ausgewuchtet ist. Denn das Ringteil zusammen mit dem Schraubteil ist im Wesentlichen rotationssymmetrisch und somit ausgewuchtet. Außerdem ist nur wenig Masse zur Ausbildung des Ringteils notwendig. Dabei ist die kraftschlüssige Verbindung mittels Anziehen des Schraubteils und somit bewirktem Aufschrumpfen des Ringteils auf die Hohlwelle effektiv ausführbar. Also ist mit geringem Aufwand an Masse ein hohes Verbindungsmoment erreichbar.

Bei einer vorteilhaften Ausgestaltung ist die radiale Breite des Ringteils unabhängig vom Umfangswinkel. Von Vorteil ist dabei, dass eine einfache Herstellung ausführbar ist. Dabei muss für das Auswuchten kein separater Herstellverfahrensschritt ausgeführt werden.

Bei einer vorteilhaften Ausgestaltung drückt das Schraubteil auf eine Abflachung der Hohlwelle, also auf einen abgeflachten insbesondere ebenen Bereich an der Außenseite der Hohlwelle. Von Vorteil ist dabei, dass die Berührverhältnisse zwischen Schraubteil und Hohlwelle wohldefiniert sind.

Bei einer vorteilhaften Ausgestaltung überlappt der vom in die Hohlwelle eingesteckten Bereich der Welle überdeckte axiale Bereich mit dem vom Ringteil überdeckten axialen Bereich. Von Vorteil ist dabei, dass die Hohlwelle auf die in die Hohlwelle eingesteckte Welle aufschrumpfbar ist.

Bei einer vorteilhaften Ausgestaltung weist die Hohlwelle einen geschlitzten Bereich auf, welcher die Schlitze aufweist. Von Vorteil ist dabei, dass die Hohlwelle im geschlitzten Bereich elastischer ist als im sonstigen Bereich.

Bei einer vorteilhaften Ausgestaltung sind die Schlitze der Hohlwelle in Umfangsrichtung regelmäßig voneinander beabstandet. Von Vorteil ist dabei, dass eine einfache Herstellung ermöglicht ist. Außerdem ist die Abflachung diametral gegenüberliegend von einem der Schlitze an der Hohlwelle anordenbar.

Bei einer vorteilhaften Ausgestaltung sind die Schlitze durch die Hohlwelle, insbesondere durch die Wandung der Hohlwelle, radial durchgehend ausgeführt und/oder axial gerichtet. Von Vorteil ist dabei, dass eine hohe Elastizität erreichbar ist.

Bei einer vorteilhaften Ausgestaltung ist die Anzahl der Schlitze drei oder größer. Von Vorteil ist dabei, dass eine unwuchtfreie Anordnung der Schlitze ausführbar ist, insbesondere durch regelmäßige Beabstandung der Schlitze in Umfangsrichtung.

Bei einer vorteilhaften Ausgestaltung weist die Hohlwelle einen konstanten Außendurchmesser auf. Von Vorteil ist dabei, dass das Ringteil mittels einer einfach herstellbaren Fase außerhalb des geschlitzten Bereichs der Hohlwelle von der Hohlwelle beabstandbar ist.

Bei einer vorteilhaften Ausgestaltung berührt der von der Fase überdeckte axiale Bereich den vom Bund überdeckten axialen Bereich und/oder grenzt an diesen an. Von Vorteil ist dabei, dass der zum Bund benachbarte Bereich keine Berührfläche zwischen Ringteil und Hohlwelle aufweist. Somit ist in diesem Bereich, der an den geschlitzten Bereich angrenzt, ein Abstand zwischen Ringteil und Hohlwelle vorhanden. Auf diese Weise leitet das Ringteil die gesamte Aufschrumpfkraft in den geschlitzten Bereich ein und nicht in den axial zwischen Bund und geschlitztem Bereich angeordneten Bereich.

Bei einer vorteilhaften Ausgestaltung ist die Wandstärke und/oder der Querschnitt des Ringteils unabhängig vom Umfangswinkel. Von Vorteil ist dabei, dass das Auswuchten in einfacher Weise durch eine Radialbohrung ausführbar ist.

Bei einer vorteilhaften Ausgestaltung ist die Fase als konusförmige Fase ausgeführt oder als krümmungskegelförmige Fase oder als Stufenfase. Von Vorteil ist dabei, dass eine konusförmige Fase einfach herstellbar ist. Hingegen bewirkt die krümmungskegelige Fase eine höhere Festigkeit, weil der Übergang vom Bereich der Fase zum restlichen Bereich festigkeitsoptimiert ausbildbar ist. Die Stufenfase ist ähnlich einer Stufenbohrung sehr einfach und kostengünstig herstellbar, wobei die Beabstandung des Ringteils von der Hohlwelle im gesamten Bereich zwischen Bund und geschlitztem Bereich der Hohlwelle sicher gewährleistbar ist.

Bei einer vorteilhaften Ausgestaltung weist das Ringteil des Spannrings an seiner Innenseite die Fase auf, so dass das Ringteil von der Hohlwelle in dem von der Fase überdeckten axialen Bereich beabstandet ist, wobei der von der Fase überdeckte axiale Bereich sich anschließt an einen geschlitzten Bereich der Hohlwelle, so dass die Schrumpfkraft des Ringteils in den geschlitzten Bereich der Hohlwelle eingetragen wird, nicht aber in den von der Fase überdeckten axialen Bereich. Von Vorteil ist dabei, dass das Ringteil mit weniger Masse ausführbar und somit einfach auswuchtbar ist.

Wichtige Merkmale bei dem Planetengetriebemotor sind, dass die Rotorwelle des das Planetengetriebe antreibenden Elektromotors in eine als Hohlwelle ausgeführte eintreibende Welle eingesteckt ist,
wobei ein Ringteil auf die Hohlwelle aufgesteckt ist,
so, dass die Welle mit der Hohlwelle mittels des Ringteils durch eine vorgenannte Verbindung verbunden ist.

Von Vorteil ist dabei, dass der Spannring an der eintreibenden Seite des Planetengetriebes anordenbar ist. Somit ist an der schnell drehenden Seite eine kraftschlüssige Verbindung bewirkbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine Seitenansicht auf einen ersten Spannring einer erfindungsgemäßen Verbindung, insbesondere Welle-Nabe Verbindung, eines Planetengetriebemotors dargestellt.
In der Figur 2 ist eine zugehörige Schrägansicht dargestellt.
In der Figur 3 ist ein die Ringachse des Spannrings enthaltender Längsschnitt durch den Spannring dargestellt.
In der Figur 4 ist eine Schrägansicht auf einen Bereich einer Hohlwelle 40 dargestellt.
In der Figur 5 ist eine Schrägansicht auf den auf die Hohlwelle 40 aufgeschobenen Spannring dargestellt.
In der Figur 6 ist ein zu Figur 5 zugehöriger Längsschnitt dargestellt.
In der Figur 7 ist eine Schrägansicht auf einen zweiten Spannring dargestellt, der sich nur in einer anstatt der konusförmigen Fase 3 anders ausgeführten Fase 80 unterscheidet vom ersten Spannring.
In der Figur 8 ist ein zur Figur 7 gehöriger, die Ringachse enthaltender Längsschnitt durch den zweiten Spannring dargestellt.
In der Figur 9 ist eine Schrägansicht auf einen dritten Spannring dargestellt, der sich nur in einer anstatt der konusförmigen Fase 3 anders ausgeführten Fase 100 unterscheidet vom ersten Spannring und zweiten Spannring.
In der Figur 10 ist ein zur Figur 9 gehöriger, die Ringachse enthaltender Längsschnitt durch den dritten Spannring dargestellt.

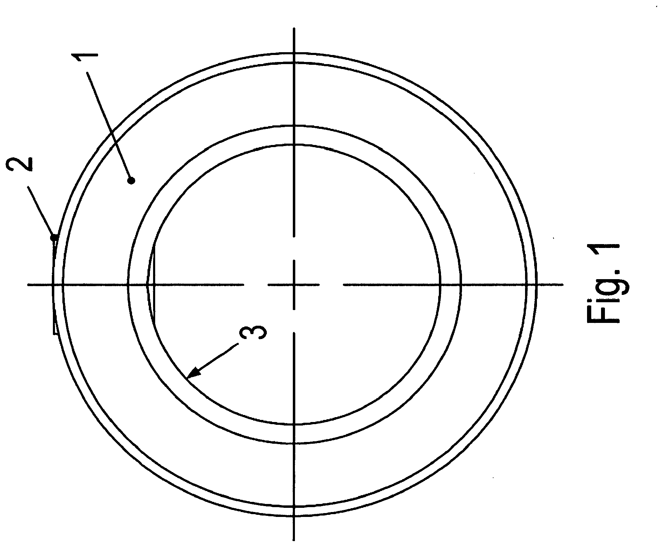

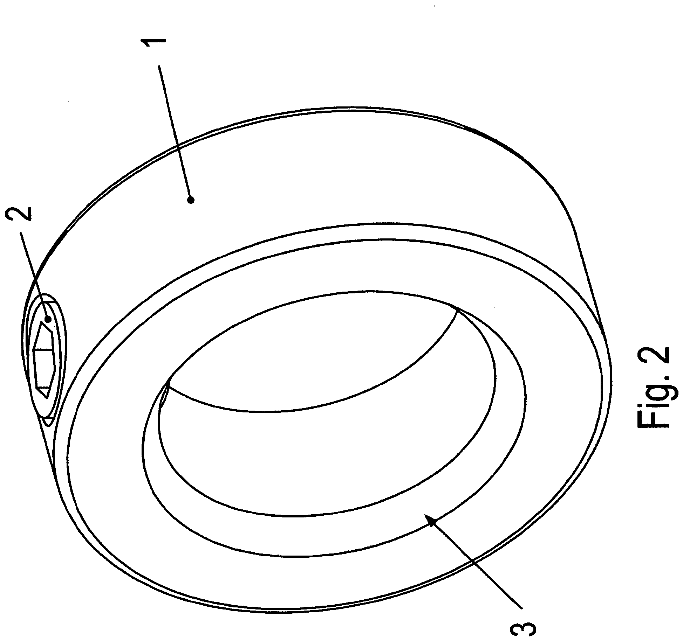

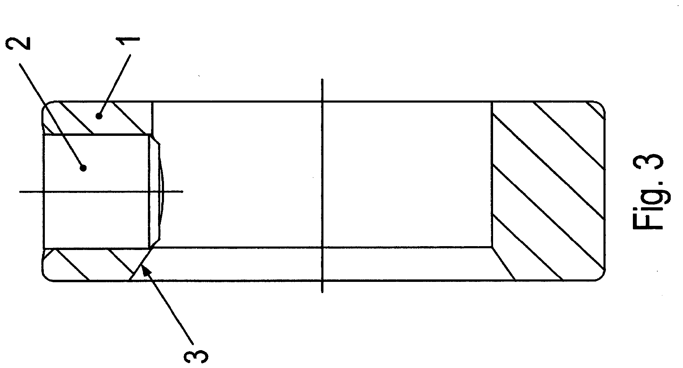

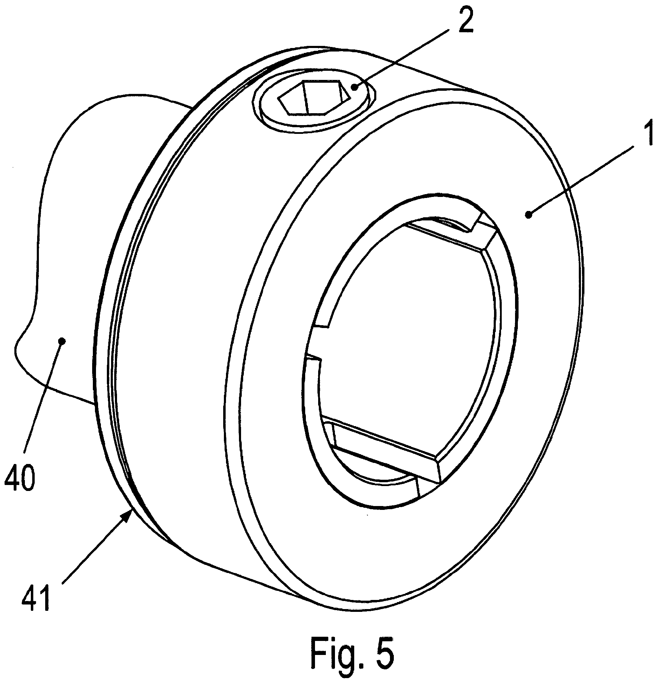

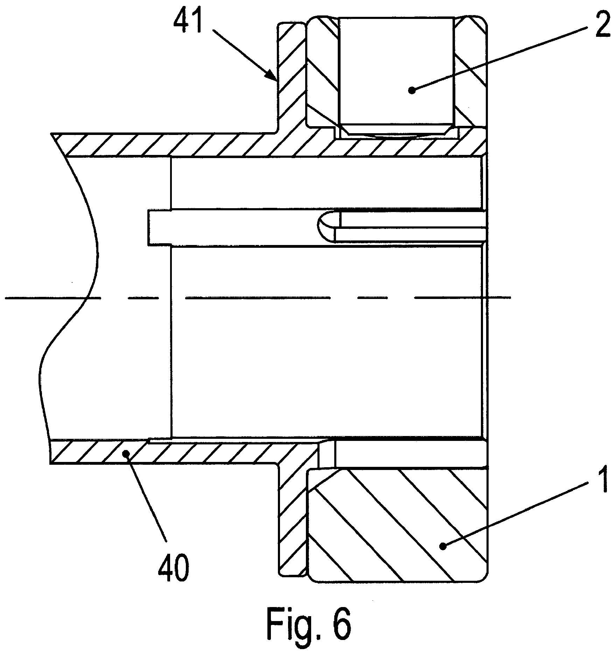

Wie in Figur 1 bis Figur 7 dargestellt, weist der Spannring ein in Umfangsrichtung nicht unterbrochenes Ringteil 1 auf.

Ein Schraubteil 2 ist in eine radial durchgehende Gewindebohrung des Ringteils 1 eingeschraubt und drückt auf eine an der Hohlwelle 40 ausgebildete Abflachung 42. Hierbei ist die Abflachung 42 tangential ausgerichtet.

Somit ist durch Einschrauben des Schraubteils 2 in die Gewindebohrung die Hohlwelle 40 von der Gewindebohrung weggedrückt. Somit wird also die Hohlwelle 40 an in Umfangsrichtung von der Abflachung 42 beabstandeten Bereichen an das Ringteil 1 angedrückt. Auf diese Weise wird ein Aufschrumpfen der Hohlwelle 40 auf die in die Hohlwelle 40 eingesteckte Welle ermöglicht.

Am Außenumfang der Hohlwelle 40 ist in einem axialen Bereich ein Bund 41 an der Hohlwelle 40 angeformt. Somit steht dieser Bund 41, insbesondere Bundkragen, radial hervor.

Das Ringteil 1 liegt am Bund 41 an und ist somit axial zum Bund 41 hin begrenzt.

Das Ringteil 1 ist in demjenigen axialen Bereich auf die Hohlwelle 40 aufgesteckt, welcher sich vom Bund 41 bis zum ersten axialen Endbereich erstreckt.

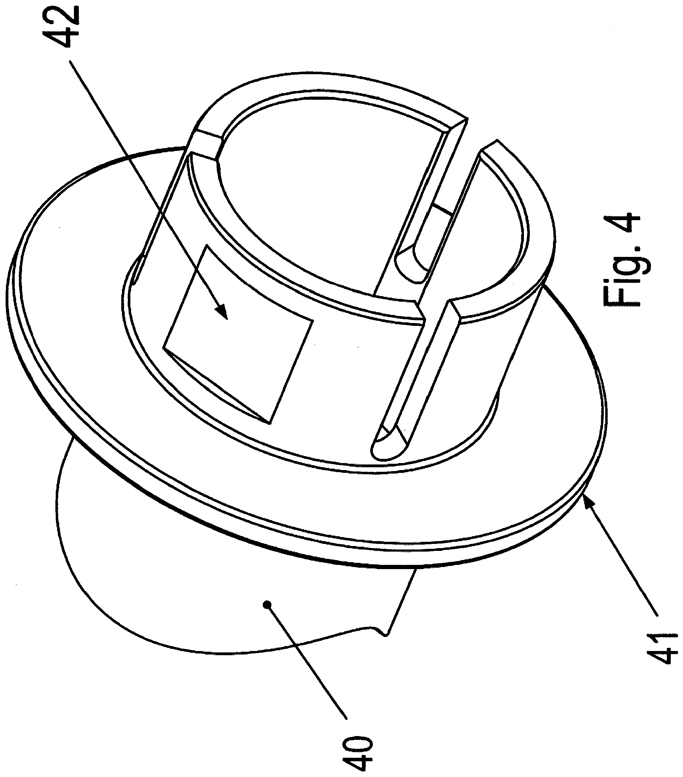

Die Hohlwelle 40 weist axial sich erstreckende, radial durch die Wandung durchgehende Schlitze auf. Dabei sind die Schlitze in Umfangsrichtung regelmäßig voneinander beabstandet. In Figur 4 sind hierzu drei Schlitze vorgesehen, welche einen Umfangswinkelabstand von 120° zueinander aufweisen.

Die Schlitze erstrecken sich vom ersten axialen Endbereich der Hohlwelle 40 bis zu einer axialen Position, welche einen nicht verschwindenden Abstand zum Bund 41 aufweist.

Beim Einschrauben des Schraubteils 2 in die Gewindebohrung wird, wie oben beschrieben, die Hohlwelle 40 von der Gewindebohrung des Ringteils 1 weggedrückt. Dabei wird dann also die Hohlwelle 40 gegen die Innenwandung des Ringteils in den in Umfangsrichtung beabstandeten Umfangswinkelbereichen gedrückt. Somit werden die drei in Umfangsrichtung zwischen den Schlitzen der Hohlwelle 40 angeordneten Bereiche radial zusammengedrückt, also radial nach innen gedrückt. Die Hohlwelle 40 zieht sich also radial zusammen und drückt somit auf die in den Figuren nicht gezeigte Welle, welche in der Hohlwelle 40 eingesteckt angeordnet ist.

Da die axial sich erstreckenden Schlitze in der Hohlwelle 40 vom Bund beabstandet sind, wird die Hohlwelle 40 in dem von den Schlitzen überdeckten axialen Bereich stärker verformt als in dem zwischen dem Bund 41 und dem von den Schlitzen überdeckten axialen Bereich angeordneten axialen Bereich.

Das Ringteil 1 weist eine konische Fase 3 auf, welche an der dem Bund 41 und der Hohlwelle 40 zugewandten Innenkante des Ringteils 1 angeordnet ist. Somit ist die Schrumpfwirkung im von den Schlitzen der Hohlwelle 40 überdeckten axialen Bereich ungestört. Denn in dem axialen Bereich zwischen Bund 41 und dem von den Schlitzen überdeckten axialen Bereich berührt das Ringteil 1 die Hohlwelle 40 nicht.

Es ist also ein Freiraum zwischen Hohlwelle 40 und Ringteil 1 mittels der Fase 3 gebildet. Somit ist beim Aufschrumpfen des Ringteils 1 auf die Hohlwelle 40 der Druck auf den geschlitzten axialen Bereich der Hohlwelle 40 aufgebracht, nicht aber auf den ungeschlitzten Bereich, insbesondere welcher an den Bund 41 angrenzt.

Das Ringteil 1 weist keine dem Schraubteil 2 gegenüberliegend angeordnete Auswuchtbohrung auf.

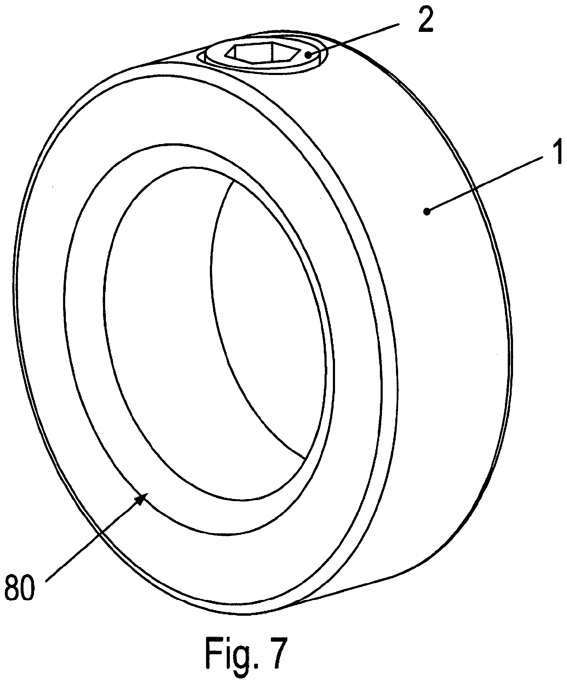

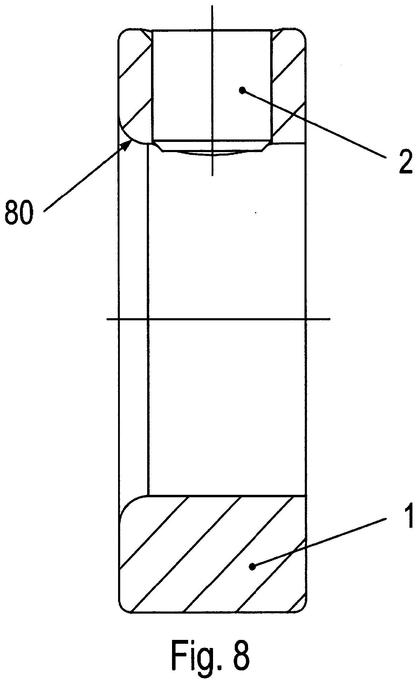

Wie in Figur 8 und Figur 7 dargestellt, ist bei einem zweiten erfindungsgemäßen Ausführungsbeispiel statt der konusförmigen Fase 3, welche als Querschnitt einen Geradenabschnitt aufweist und durch Rotation dieses Geradenabschnitts um die Ringachse des Ringteils 1 darstellbar ist, eine krümmungskegelförmige Fase 80 auf, welche durch Rotation eines gekrümmten Kurvenabschnitts entsteht. Der gekrümmte Kurvenabschnitt ist entweder ein Kreisabschnitt, so dass eine einfache Herstellung ausführbar ist, oder ein Ellipsenabschnitt, so dass eine erhöhte Festigkeit im Übergangsbereich des Ringteils 1 zur Fase 80 hin erreicht ist. In jedem Fall geht die Fase 80 glatt über in den Bereich des Ringteils 1 mit kleinstem Innendurchmesser, also Berührbereich zur Hohlwelle 40 hin.

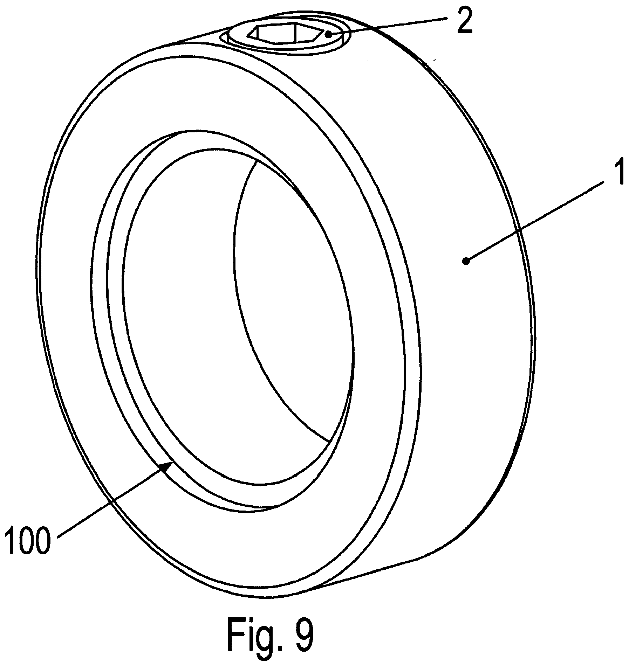

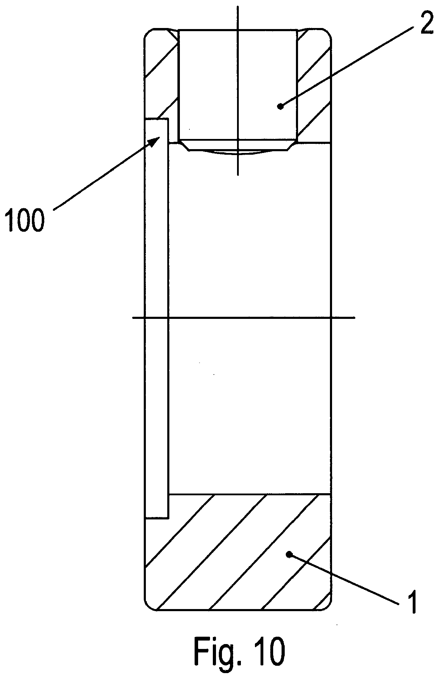

Wie in Figur 10 und Figur 9 dargestellt, ist bei einem dritten erfindungsgemäßen Ausführungsbeispiel statt der konusförmigen Fase 3 des ersten Ausführungsbeispiels und statt der Fase 80 des zweiten Ausführungsbeispiels eine Stufenfase 100, also einem zylindrischen Absatz, ausgeführt. Somit weist das Ringteil 1 im von der Stufenfase 100 überdeckten axialen Bereich einen insbesondere konstanten Innendurchmesser auf, welcher größer ist als der kleinste Innendurchmesser des Ringteils 1. Wichtig ist dabei, dass der im von der Stufenfase 100 überdeckten axialen Bereich vorhandene Innendurchmesser unterschiedlich ist von dem kleinsten Innendurchmesser des Ringteils 1, welchen dieses im Berührbereich zur Hohlwelle 40 hin, also im geschlitzten Bereich der Hohlwelle 40 aufweist.

### Bezugszeichenliste

1 Ringteil
2 Schraubteil
3 konusförmige Fase
40 Hohlwelle
41 Bund, insbesondere Bundkragen
42 Abflachung
80 krümmungskegelförmige Fase
100 Stufenfase

## Patentansprüche

1. Verbindung, aufweisend eine in eine Hohlwelle (40) zumindest teilweise eingesteckte Welle und ein auf die Hohlwelle (40) aufgestecktes Ringteil (1), insbesondere eines Spannrings,
**wobei** das Ringteil (1) axial begrenzt ist von einem an der **Hohlwelle (40)** ausgeformten, insbesondere radial hervorstehenden, Bund (41) und/oder das Ringteil (1) an einem oder dem Bund (41) an der **Hohlwelle (40)** ausgeformten, insbesondere radial hervorstehenden, Bund (41), anliegt,
wobei die Hohlwelle (40) vom Bund (41) beabstandete Schlitze, insbesondere Axialschlitze aufweist,
wobei das Ringteil (1), an seiner Innenseite und/oder an seiner Ringöffnung und/oder an seinem dem Bund (41) zugewandten axialen Endbereich, eine Fase (3) aufweist,
so, dass der Innendurchmesser des Ringteils (1) in dem von der Fase (3) überdeckten axialen Bereich größer ist als der Innendurchmesser in demjenigen axialen Bereich, in welchem das Ringteil (1) die Hohlwelle (40) berührt,
wobei das Ringteil (1) eine radial durchgehende Gewindebohrung aufweist, in welche ein Schraubteil (2), insbesondere Madenschraube und/oder Gewindestift, eingeschraubt ist, welches auf die Hohlwelle (40) drückt,
**dadurch gekennzeichnet, dass**
eine **Abflachung (42) am Umfang der Hohlwelle (40) diametral zu einem der Schlitze angeordnet ist und/oder dass**
**der Mittelpunkt des von** einer/der **Abflachung (42)** am Umfang der Hohlwelle (40) **überdeckten Umfangswinkelbereichs 180° in Umfangsrichtung entfernt ist vom Mittelpunkt des von einem der Schlitze überdeckten Umfangswinkelbereichs.**

2. Verbindung nach Anspruch 1,
**dadurch gekennzeichnet, dass**
die radiale Breite des Ringteils (1) unabhängig vom Umfangswinkel ist.

3. Verbindung nach mindestens einem der vorangegangenen Ansprüche,
**dadurch gekennzeichnet, dass**
das Schraubteil (2) auf die Abflachung (42) der Hohlwelle (40), also einen abgeflachten insbesondere ebenen Bereich an der Außenseite der Hohlwelle (40), drückt.

4. Verbindung nach mindestens einem der vorangegangenen Ansprüche,
**dadurch gekennzeichnet, dass**
der vom in die Hohlwelle (40) eingesteckten Bereich der Welle überdeckte axiale Bereich mit dem vom Ringteil (1) überdeckten axialen Bereich zumindest überlappt.

5. Verbindung nach mindestens einem der vorangegangenen Ansprüche,
**dadurch gekennzeichnet, dass**
die Hohlwelle (40) einen geschlitzten Bereich aufweist, welcher die Schlitze aufweist.

6. Verbindung nach mindestens einem der vorangegangenen Ansprüche,
**dadurch gekennzeichnet, dass**
die Schlitze der Hohlwelle (40) in Umfangsrichtung regelmäßig voneinander beabstandet sind.

7. Verbindung nach mindestens einem der vorangegangenen Ansprüche,
**dadurch gekennzeichnet, dass**
die Schlitze durch die Hohlwelle (40), insbesondere durch die Wandung der Hohlwelle (40), radial durchgehend, axial gerichtet sind.

8. Verbindung nach mindestens einem der vorangegangenen Ansprüche,
**dadurch gekennzeichnet, dass**
die Anzahl der Schlitze drei oder größer ist.

9. Verbindung nach mindestens einem der vorangegangenen Ansprüche,
**dadurch gekennzeichnet, dass**
die Hohlwelle (40) in dem von dem Ringteil (1) überdeckten axialen Bereich einen konstanten Außendurchmesser aufweist.

10. Verbindung nach mindestens einem der vorangegangenen Ansprüche,
**dadurch gekennzeichnet, dass**
der von der Fase (3) überdeckte axiale Bereich den vom Bund (41) überdeckten axialen Bereich berührt und/oder an diesen angrenzt.

11. Verbindung nach mindestens einem der vorangegangenen Ansprüche,
**dadurch gekennzeichnet, dass**
die Wandstärke und/oder der Querschnitt des Ringteils (1) unabhängig vom Umfangswinkel ist.

12. Verbindung nach mindestens einem der vorangegangenen Ansprüche,
**dadurch gekennzeichnet, dass**
die Fase (3) als konusförmige Fase (3) ausgeführt ist
oder als krümmungskegelförmige Fase (80)
oder als Stufenfase (100).

13. Verbindung nach mindestens einem der vorangegangenen Ansprüche,
**dadurch gekennzeichnet, dass**
das Ringteil (1) von der Hohlwelle (40) in dem von der Fase (3) überdeckten axialen Bereich beabstandet ist,
insbesondere wobei der von der Fase (3) überdeckte axiale Bereich sich anschließt an den geschlitzten Bereich der Hohlwelle (40), so dass die Schrumpfkraft des Ringteils (1) in den geschlitzten Bereich der Hohlwelle (40) eingetragen wird, nicht aber in den von der Fase (3) überdeckten axialen Bereich.

14. Planetengetriebemotor,
wobei die Rotorwelle des das Planetengetriebe antreibenden Elektromotors in eine als Hohlwelle (40) ausgeführte eintreibende Welle eingesteckt ist,
wobei ein Ringteil (1) auf die Hohlwelle (40) aufgesteckt ist,
so, dass die Welle mit der Hohlwelle (40) mittels des Ringteils (1) durch eine Verbindung nach mindestens einem der vorangegangenen Ansprüche verbunden ist.

## Claims

1. A connection, having a shaft, at least partially inserted in a hollow shaft (40), and a ring part (1), in particular of a clamping ring, placed onto the hollow shaft (40), wherein the ring part (1) is axially bounded by a collar (41), formed on the hollow shaft (40) and in particular radially projecting, and/or the ring part (1) rests against a or the collar (41), formed on the hollow shaft (40) and in particular radially projecting, wherein the hollow shaft (40) has slots, in particular axial slots, spaced apart from the collar (41), wherein the ring part (1) has a bevel (3) at its inside and/or at its ring opening and/or at its axial end region facing the collar (41), so that the inner diameter of the ring part (1) is greater in the axial region covered by the bevel (3) than the inner diameter in that axial region in which the ring part (1) contacts the hollow shaft (40), wherein the ring part (1) has a radially through-passing tapped bore into which there is screwed a screw part (2), in particular grub screw and/or headless screw, which presses onto the hollow shaft (40), **characterised in that** a flattened portion (42) is arranged at the circumference of the hollow shaft (40) in a manner diametrical to one of the slots, and/or **in that** the central point of the circumferential angular region covered by a/the flattened portion (42) at the circumference of the hollow shaft (40) is in the circumferential direction 180° away from the central point of the circumferential angular region covered by one of the slots.

2. A connection according to claim 1, **characterised in that** the radial width of the ring part (1) is independent of the circumferential angle.

3. A connection according to at least one of the preceding claims, **characterised in that** the screw part (2) presses onto the flattened portion (42) of the hollow shaft (40), therefore a flattened, in particular plane, region at the exterior of the hollow shaft (40).

4. A connection according to at least one of the preceding claims, **characterised in that** the axial region covered by the shaft region inserted in the hollow shaft (40) at least overlaps with the axial region covered by the ring part (1).

5. A connection according to at least one of the preceding claims, **characterised in that** the hollow shaft (40) has a slotted region which has the slots.

6. A connection according to at least one of the preceding claims, **characterised in that** that the slots of the hollow shaft (40) are regularly spaced apart from one another in the circumferential direction.

7. A connection according to at least one of the preceding claims, **characterised in that** the slots are axially directed, radially passing through the hollow shaft (40), in particular through the wall of the hollow shaft (40).

8. A connection according to at least one of the preceding claims, **characterised in that** the number of the slots is three or more.

9. A connection according to at least one of the preceding claims, **characterised in that** the hollow shaft (40) has a constant outer diameter in the axial region covered by the ring part (1).

10. A connection according to at least one of the preceding claims, **characterized in that** the axial region covered by the bevel (3) contacts the axial region covered by the collar (41) and/or adjoins thereto.

11. A connection according to at least one of the preceding claims, **characterised in that** the wall thickness and/or the cross-section of the ring part (1) is/are independent of the circumferential angle.

12. A connection according to at least one of the preceding claims, **characterised in that** the bevel (3) is in the form of a conical bevel (3) or in the form of a bevel (80) in the form of a curved taper or in the form of a stepped bevel (100).

13. A connection according to at least one of the preceding claims, **characterised in that** the ring part (1) is spaced apart from the hollow shaft (40) in the axial region covered by the bevel (3), in particular wherein the axial region covered by the bevel (3) adjoins the slotted region of the hollow shaft, so that the shrink force of the ring part (1) is applied to the slotted region of the hollow shaft (40), not however to the axial region covered by the bevel (3).

14. A planetary gear motor, wherein the rotor shaft of the electric motor driving the planetary gear is inserted into an input shaft in the form of a hollow shaft (40), wherein a ring part (1) is placed onto the hollow shaft (40), so that the shaft is connected to the hollow shaft (40) by means of the ring part (1) by a connection according to at least one of the preceding claims.

## Revendications

1. Couplage, comprenant un arbre inséré au moins partiellement dans un arbre creux (40) et une partie bague (1) placée sur l'arbre creux (40), notamment une bague de serrage,
la partie bague (1) étant limitée axialement par un collet (41) qui est formé sur l'arbre creux (40), notamment qui fait saillie radialement, et/ou la partie bague (1) venant contre un collet ou le collet (41), notamment contre un collet (41) qui est formé sur l'arbre creux (40), notamment qui fait saillie radialement,
l'arbre creux (40) présentant des fentes espacées du collet (41), notamment des fentes axiales,
la partie bague (1) présentant, sur son côté intérieur et/ou sur son ouverture annulaire et/ou sur sa zone d'extrémité axiale tournée vers le collet (41), un chanfrein (3),
de sorte que le diamètre intérieur de la partie bague (1) est plus grand dans la zone axiale recouverte par le chanfrein (3) que le diamètre intérieur dans la zone axiale de celui-ci dans laquelle la partie bague (1) est en contact avec l'arbre creux (40),
la partie bague (1) comprenant un alésage fileté radialement continu, dans lequel une partie vis (2), notamment une vis sans tête et/ou une tige filetée, est vissée, qui presse sur l'arbre creux (40),
**caractérisé en ce que**
un aplatissement (42) est agencé sur la circonférence de l'arbre creux (40) diamétralement à une des fentes, et/ou **en ce que**
le point médian de la zone angulaire circonférentielle recouverte par un/l'aplatissement (42) sur la circonférence de l'arbre creux (40) est éloigné de 180° dans la direction circonférentielle du point médian de la zone angulaire circonférentielle recouverte par une des fentes.

2. Couplage selon la revendication 1,
**caractérisé en ce que**
la largeur radiale de la partie bague (1) est indépendante de l'angle circonférentiel.

3. Couplage selon au moins l'une quelconque des revendications précédentes,
**caractérisé en ce que**
la partie vis (2) presse sur l'aplatissement (42) de l'arbre creux (40), c'est-à-dire une zone aplatie notamment plane sur le côté extérieur de l'arbre creux (40) .

4. Couplage selon au moins l'une quelconque des revendications précédentes,
**caractérisé en ce que**
la zone axiale recouverte par la zone de l'arbre insérée dans l'arbre creux (40) est au moins en chevauchement avec la zone axiale recouverte par la partie bague (1).

5. Couplage selon au moins l'une quelconque des revendications précédentes,
**caractérisé en ce que**
l'arbre creux (40) présente une zone fendue, qui présente les fentes.

6. Couplage selon au moins l'une quelconque des revendications précédentes,
**caractérisé en ce que**
les fentes de l'arbre creux (40) sont espacées régulièrement les unes des autres dans la direction circonférentielle.

7. Couplage selon au moins l'une quelconque des revendications précédentes,
**caractérisé en ce que**
les fentes sont orientées axialement à travers l'arbre creux (40), notamment à travers la paroi de l'arbre creux (40), de manière radialement continue.

8. Couplage selon au moins l'une quelconque des revendications précédentes,
**caractérisé en ce que**
le nombre de fentes est de trois ou plus.

9. Couplage selon au moins l'une quelconque des revendications précédentes,
**caractérisé en ce que**
l'arbre creux (40) présente un diamètre extérieur constant dans la zone axiale recouverte par la partie bague (1).

10. Couplage selon au moins l'une quelconque des revendications précédentes,
**caractérisé en ce que**
la zone axiale recouverte par le chanfrein (3) est en contact avec la zone axiale recouverte par le collet (41) et/ou est adjacente à celle-ci.

11. Couplage selon au moins l'une quelconque des revendications précédentes,
**caractérisé en ce que**
l'épaisseur de paroi et/ou la section transversale de la partie bague (1) est indépendante de l'angle circonférentiel.

12. Couplage selon au moins l'une quelconque des revendications précédentes,
**caractérisé en ce que**
le chanfrein (3) est réalisé en tant que chanfrein de forme conique (3),
ou en tant que chanfrein de forme conique incurvé (80), ou en tant que chanfrein échelonné (100).

13. Couplage selon au moins l'une quelconque des revendications précédentes,
**caractérisé en ce que**
la partie bague (1) est espacée de l'arbre creux (40) dans la zone axiale recouverte par le chanfrein (3), notamment la zone axiale recouverte par le chanfrein (3) est contiguë à la zone fendue de l'arbre creux (40), de sorte que la force de rétraction de la partie bague (1) est introduite dans la zone fendue de l'arbre creux (40), mais pas dans la zone axiale recouverte par le chanfrein (3).

14. **Moteur à engrenage planétaire,**
dans lequel l'arbre de rotor du moteur électrique entraînant l'engrenage planétaire est inséré dans un arbre d'entraînement réalisé en tant qu'arbre creux (40) ,
une partie bague (1) étant placée sur l'arbre creux (40) ,
de sorte que l'arbre est relié avec l'arbre creux (40) au moyen de la partie bague (1) par un couplage selon au moins l'une quelconque des revendications précédentes.
